# EUROPEAN PATENT APPLICATION

(11) **EP 2 808 824 A1**
(43) Date of publication of application: **03.12.2014**
(21) Application number: 13380023.5
(22) Date of filing: 29.05.2013
(51) Int. Cl.: G06K 7/10, B41J 3/36

(54) **Device and method for reading a machine readable code printed on an object**

(71) Applicant: Gomez Ceballos, Juan Carlos, 08195 Sant Cugat Del Valles (Barcelona) (ES); Begil Ruiz, Javier, 08025 Barcelona (Barcelona) (ES); Gros Haas, Jiri, 08034 Barcelona (ES)
(72) Inventor: Gomez Ceballos, Juan Carlos, 08195 Sant Cugat Del Valles (Barcelona) (ES); Begil Ruiz, Javier, 08025 Barcelona (Barcelona) (ES); Gros Haas, Jiri, 08034 Barcelona (ES)
(74) Representative: Juncosa Miro, Jaime

(57) **Abstract**

The present invention relates to a device and method for reading a machine-readable code printed on an object, said device comprises
- reading means (1) intended for reading a machine-readable code printed on an object;
- detection means intended for detecting whether the printed code read with the reading means (1) has been altered; and
- alteration means for altering the printed code, which are configured and arranged for acting while using the reading means (1) to perform a first reading of the printed code.

The method comprises:
a) performing a first reading of the code;
b) altering the code while performing the first reading or operations associated therewith that are prior to, simultaneous with or after step a); and
c) detecting during a second reading of the code or during operations associated therewith that the printed code has been altered.

## Description

### Technical Field

In a first aspect, the present invention generally relates to a device for reading a machine-readable code printed on an object, which is suitable for detecting whether the printed code has been altered, and particularly to a device including alteration means for altering the printed code.

A second aspect of the invention relates to a method for reading a machine-readable code printed on an object, which comprises altering the printed code during a first reading thereof or during operations associated therewith.

### Prior State of the Art

Devices for reading machine-readable codes printed on an object, such as bar codes, QR codes or ICI codes, capable of detecting whether the code has been altered are known. Patent documents describing some of such devices associated with codes that can be altered in different ways are mentioned below.

Application WO2003058285A1 proposes an identifier including two or more codes, at least one of which modifies its value when there is applied to it a stimulus, such as a pressure, temperature, electric current, electromagnetic field, light, or chemical composition change, the lapsing of a certain period of time or consequence of a time change, exposure to certain gases, solids, liquids or emulsions. Said application proposes inducing changing the value of the code, such as the value associated with a color change in the ink that forms it, in a direct manner, for example by subjecting it to a temperature change, in the event that the ink is sensitive to temperature, or to an electric pulse applied by an operator to contacts connected to an area of a code made of an electrically sensitive material, or in an indirect manner by means of an electric circuit connected to an a area of the electrically sensitive code and including, for example, a temperature sensor which, when detecting a temperature change, sends an electric signal to the code that makes it change color, for example.

International application WO2007088251A1 proposes a method and a system where a code structure, which is readable by a reader, is altered such that either it is impossible for the reader to read the code associated therewith, for example in a second reading, and therefore the code is a single-use code, or when the reader reads it, it detects that the code has been altered. The alteration means for altering the code described in this international application are arranged in the actual structure of the code and are manual, being implemented, for example, in a portion that can be separated from the actual structure of the code.

The codes described in both international applications must be expressly constructed to comply with the indicated purpose, i.e., to enable alteration, either by they themselves including the alteration means (WO2007088251A1) or by being formed in a special manner to change the value for a specific stimulus (WO2003058285A1), for example by means of an ink that changes color according to temperature or electricity.

None of the mentioned applications indicates the possibility of altering any class of code that has not been expressly designed for such purpose, nor does any of the mentioned applications describe any tool incorporating the alteration means, beyond a simple portable electric cell or battery for an embodiment of WO2003058285A1 for which purpose the code includes electric contacts and an electrically sensitive region connected thereto.

Even though application WO2007088251A1 indicates that the alteration of the code can take place after a first reading, so that such alteration is detected in a second reading, since such alteration is performed manually, it cannot be assured that the alteration of the code actually takes place prior to the second reading.

### Description of the Invention

It is necessary to offer an alternative to the state of the art that covers the voids therein in the form of a device that allows assuring that the alteration takes place between a first reading and a second reading of the code.

To that end, in a first aspect the present invention relates to a device for reading a machine-readable code printed on an object which comprises:
- reading means intended for reading the machine-readable code printed on an object; and
- detection means intended for detecting whether the printed code read with said reading means has been altered.

Unlike the devices known in the state of the art, the device proposed by the present invention comprises alteration means for altering the printed code which are configured and arranged for acting while using the reading means to perform a first reading of the printed code.

It is thus assured that the code is altered prior to a second reading thereof, because the alteration of the code takes place during the actual operation of the device to perform the first reading.

For a preferred embodiment, the device of the first aspect of the invention is portable, being able to be in the form of a pen or gun, for example.

According to one embodiment, the alteration means for altering the printed code comprise a printing tool intended to perform the alteration of the printed code by printing at least one mark thereon, preferably with contact.

As regards to the reading means, depending on the embodiment said means are configured to perform the reading of the printed code with or without contact therewith, and taking a single measurement (for example acquiring an image of a QR with a camera of the reading means) or by means of a sequence of measurements (for example reading a bar code by dragging the tip of a reader in the form of a pen of the reading means across said bar code).

Depending on the embodiment, said printing tool uses visible ink or ink not visible to the human eye, such as ink visible only under ultraviolet light, preferably indelible or an equivalent element.

According to one embodiment, the detection means comprise a reading instrument configured for reading said mark, such as a spectrometer.

The printing tool generally comprises a print head with ink outlet nozzles through which the ink is ejected onto the region to be marked.

Even though for a less preferred embodiment it is possible for said ejection of the ink to take place by contacting the nozzles with the region to be marked, such action causes such nozzles to frequently become blocked up, so they must be cleaned with a solvent or the like, also on a frequent basis. For such less preferred embodiment, the device of the invention comprises cleaning means that perform such cleaning of the nozzles, preferably after each printing.

Nevertheless, for the purpose of preventing such blocking of the printing nozzles, such nozzles preferably do not contact the region to be marked when they eject the ink, so according to a preferred embodiment, the device proposed by the first aspect of the invention comprises spacing means for determining the optimal printing space or distance between the region of the printed code on which said mark is to be printed and the ink outlet nozzles of the printing tool.

For a variant of said preferred embodiment, the spacing means comprise a spacing element arranged such that upon contacting the surface to be printed, it does not allow the printing tool to contact same, keeping the ink outlet nozzles thereof spaced from the surface to be printed a distance that is predetermined by said spacing element, such that the ejection of ink takes place maintaining said distance, which has been calculated to prevent the ink from solidifying before it reaches the region to be marked so that it solidifies on said region.

For other embodiments, the mentioned spacing means act without physically contacting the surface to be printed, emitting some type of waves, such as light or sound waves, towards it and receiving and detecting the waves reflected by the surface to be printed, determining the predetermined distance by analyzing the emitted and/or reflected waves (for example, calculating the time of flight between emission and reception or calculating it by any other known type of calculation), using to that end a suitable mechanism, such as a laser scanner, and ultrasound scanner, etc.

According to one embodiment, the device of the first aspect of the invention also comprises a light source associated with a light guide (such as a fiber optic bar with a white light LED) used to emit light towards the region for printing the mark, such that the resulting spectrum has a low level of "light noise", i.e., to control a possible light contamination that may complicate the spectrometer's reading of the mark.

For other embodiments, the alteration means for altering the printed code comprise tools of another kind that do not print a mark but rather alter the code in a different way, applying any class of stimuli that a person skilled in the art considers suitable (such as those described in WO2003058285A1), the code preferably being a conventional code that does not need to be adapted to be susceptible to being altered, although it is also possible, for other less preferred embodiments for which the tools for altering the code require it, for the code to be adapted for such purpose (for example, formed from inks that change color according to temperature, an electrical stimulus, etc.).

For one embodiment, the device of the first aspect of the invention comprises control means intended for controlling:
- the reading means to perform at least a first and a second non-simultaneous readings;
- the alteration means for altering the printed code to perform said alteration while performing the first reading of the printed code or operations associated therewith that are prior to, simultaneous with or after the first reading; and
- the detection means to perform the detection of whether the printed code has been altered.

According to a variant of said embodiment, the control means comprise a processing system with at least one memory intended for storing information about read printed codes, including information relating to whether a printed code had already been previously read and information about the result of said detection of whether the printed code has been altered.

According to one embodiment, the reading means comprise a visible or infrared light emitter and a scanner that receives the light reflected in the reflective portions of the printed code and converts the received light fluctuations into electric pulses sent to the processing system, which decodes them by means of mathematical algorithms implemented therein.

According to one embodiment, the device of the first aspect of the invention comprises communication means connected with the processing system for the purpose of establishing a preferably wireless, short-, medium-, or long-range communication path (such as a 3G data network), for various purposes, including that of providing to a remote unit the data stored in the memory and/or the decoded codes and/or for programming or re-programming the processing system, for example to adapt it for reading another class of codes.

For one embodiment, the device comprises an acoustic emitter controlled by the control means for emitting different acoustic signals depending on whether or not, during the reading of said printed code, it is detected that the printed code has been altered.

According to one embodiment, the alteration means for altering the printed code are intended to perform an alteration detectable by the detection means but undetectable by other devices or systems for reading printed codes, for the purpose of allowing such other reading devices or systems (such as those associated with points of sale) can read the code an indefinite number of times without detecting alterations thereof.

According to one embodiment, the device of the first aspect of the present invention comprises a casing internally housing at least part of the reading means, of the alteration means for altering the printed code, of the detection means and of the control means.

A second aspect of the invention relates to a method for reading a machine-readable code printed on an object which comprises:
a) performing a first reading of said machine-readable code printed on an object;
b) altering said printed code; and
c) detecting, during a second reading thereof or during operations associated with said second reading that are prior to, simultaneous with or after said second reading, that the printed code has been altered.

Unlike the methods known in the state of the art, the method proposed by the second aspect of the invention comprises performing step b) while performing the first reading or operations associated therewith that are prior to, simultaneous with or after step a).

To perform said first reading the method of the invention comprises the use of a device including reading means, said operations associated with the first reading being operations that are included in the use of said device, including the approximation of said device to the printed code, the emission/reception, by means of the reading means, of an optical reading signal (visible or infrared light) headed towards or received from the printed code and the distancing of the device from the printed code.

In other words, for one embodiment the alteration of the printed code is performed during said operations associated with the first reading but not necessarily at the exact time that said first reading is taking place, i.e., not exactly at the time in which an acquisition of light reflected on the code is performed, when the reading is performed with a scanner, or in which an image of the code is acquired, when the reading is performed with a camera, but rather, for example, immediately prior to the exact time in which the first reading is performed.

The method comprises performing said alteration using alteration means included in the device and performing said detection using detection means also included in the device.

For a preferred embodiment, the method of the second aspect of the invention comprises performing at least the following actions sequentially using the mentioned device:
- detecting whether or not the printed code has been altered, and:
   - if it has not been altered:
   - altering it in said step b); and
   - performing said first reading of the printed code of step a);
   or
- if the printed code has been altered:
   - performing said second reading of the printed code.

The method optionally comprises performing a series of verifications relating both to the detection of the alteration of the code and to the reading thereof.

According to one embodiment, the method of the second aspect of the invention comprises the use of the device of the first aspect.

By means of the device and method of the present invention it is assured in applications where a code printed on an object is only allowed to be read once; if the attempt is made to read it more times with the same device or a similar one, it is also assured that it is readily determined that such additional readings are not authorized.

One of the applications requiring such assurances are those associated with promotions of various products, such as pharmaceutical products, where according to the amount of a product sold, a pharmacist earns a number of points to be exchanged for the prizes of the promotion, whether they are discounts or free product batches.

The conventional way to handle these promotions consists of the pharmacist physically sending the bar codes of the products to the company promoting the product, and said company is responsible for validating and counting them, but this entire process is complex, expensive and requires the work and collaboration of several people, so if the pharmacist himself/herself scans the codes and sends the result, for example through the Internet, to the promoting company, the method is considerably simplified and costs are much lower. However, to that end the pharmacist must only be allowed to scan the code of a product once to prevent the fraud that doing it several times would entail, simulating that he/she has sold more than what he/she actually did. The device and the method proposed by the present invention allow preventing this possible fraud, assuring that second authorized readings of one and the same code are not performed.

### Brief Description of the Drawings

The foregoing and other advantages and features will be better understood from the following detailed description of embodiments in reference to the attached drawings, which must be interpreted in a non-limiting illustrative manner, in which:
Figure 1 is a schematic depiction of the device proposed by the first aspect of the invention for one embodiment; and
Figure 2 shows an object on which a bar code that has been altered by means of printing a mark or stamp thereon.

### Detailed Description of several Embodiments

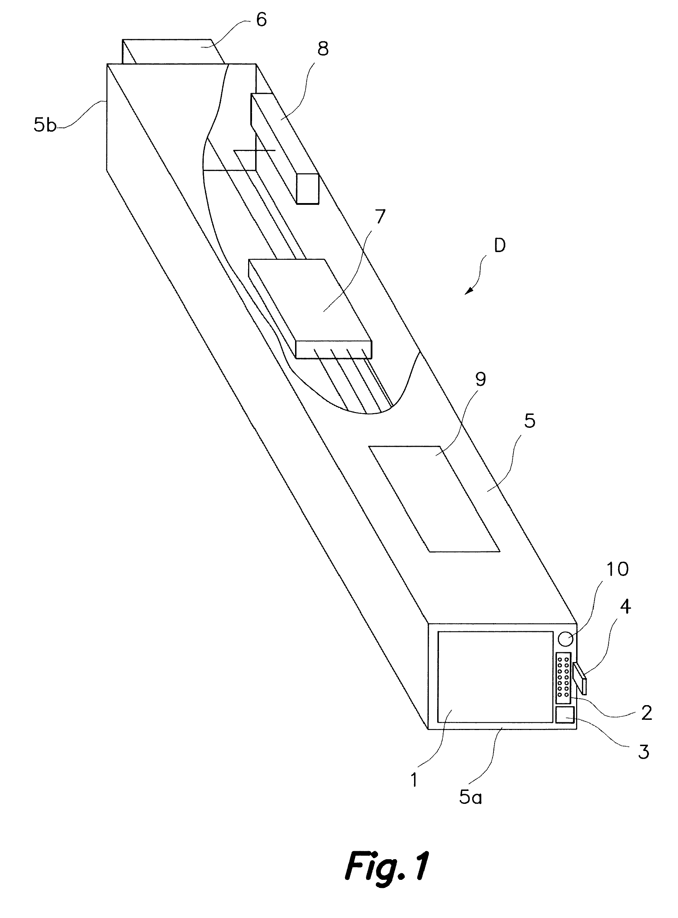

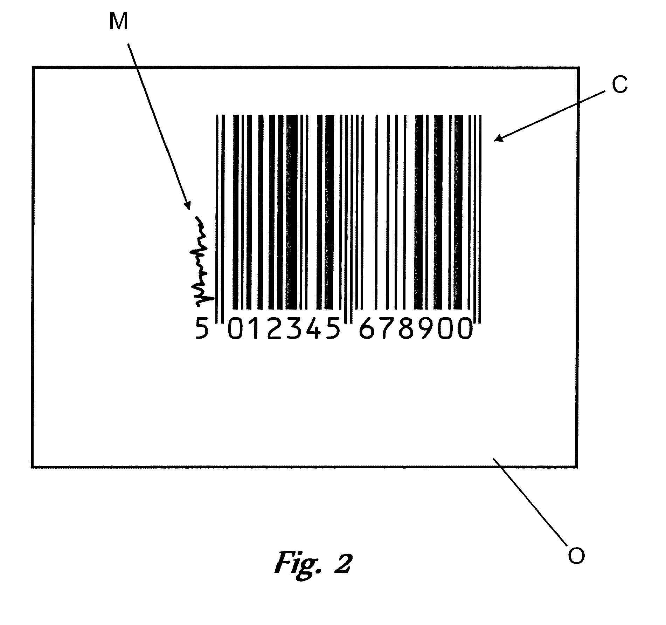

Figure 1 illustrates the device proposed by the first aspect of the invention for an embodiment for which said device comprises a casing 5 (the inside of which is illustrated partially uncovered by means of an opening defined in one of its walls) internally housing the following elements, some of which are only seen partially in Figure 1, particularly their end portions arranged at the end or tip 5a of the casing 5:
- reading means 1, such as a scanner, for reading the machine-readable code C printed on an object O (see Figure 2);
- detection means, such as a spectrometer 3, for detecting whether the printed code has been altered;
- alteration means for altering the code C comprising a printing tool 2 the ink outlet nozzles of which are seen in Figure 1, the remaining components of the printing tool (ink cartridge, conduits for the ink, electrical conductors, etc.) being arranged inside the casing 5;
   spacing means for determining the optimal printing space or distance between the region of the printed code C on which the mark M is to be printed and the ink outlet nozzles of the printing tool 2, comprising a spacing element 4 in the form of a rigid bar with one end fixed to the end 5a of the casing 5, projecting therefrom, such that when its free end contacts the surface to be printed, it does not allow the nozzles of the printing tool 2 to contact said surface, keeping them spaced a predetermined distance from the surface to be printed; and
- a light guide 10 for emitting light towards the region for printing the mark M for the purpose of controlling possible light contamination that can affect the detection of the mark M by the spectrometer 3.

In the embodiment illustrated in Figure 2, the region of the code C for printing the mark M is located in the information field or clear area located in the left-hand margin of the code C. Such location for the mark M is suitable because it does not prevent being able to read the code with other systems, such as those associated with points of sale.

Other elements included in the device D are control means 7, including a processing system, one or more memories and communication means (not illustrated), as well as a speaker 8, connected with the control means 7, for generating acoustic signals when reading the code, which are different according to whether or not said code has been altered.

Figure 1 also illustrates a display 9 which is connected with the control means 7 and is intended for displaying different classes of information, including information about the codes that have been read, error messages, etc.

A button 6 projects from the end 5b of the casing 5, said button 6 being connected to the control means 7 and the activation of which advantageously triggers a sequence of actions to be performed by means of the device D, including the activation of the spectrometer 3, the activation of the ejection of the ink by the printing tool 2, conditioned to the spectrometer not having detected a mark or stamp M, and the activation of the scanner 1 for reading the code C. The emission of light by means of the light guide 10 can also be performed upon activating the button 6 or prior to the activation thereof so that, for example, the user can manually manipulate the device D for correctly aiming, with the light beam emitted, at the region on which the mark M is to be printed.

A series of functional requirements that the device proposed by the first aspect of the invention has, in a larger or smaller number, for different embodiments are indicated below:
- When the scanner 1 reads a code C, it leaves an imprint, mark or stamp M on the surface to indicate that it has already been read. That means that the surface must be "spotted" with indelible ink or an equivalent.
- Every time a code is read, the device D saves in the mentioned internal memory a record with: the client or device code, record no., timestamp, product code, a "flag" of previously read code, spectrum of the spot (or RGB) and error code.
- If a code is read again, it is indicated in the memory of the device D that it has already been read; the reader, specifically the spectrometer 3, detects that the surface is "spotted" and in the data corresponding to said reading the processing system sets to 1 the read "flag" in the record.
- If the spot or mark M could not be made, the error is indicated in the record.
- The device D preferably has the capacity to communicate IP frames (the contents of the record) to a specified address.
- The memory of the device D must be removable in order to dump it into another device: a portable computer or the like, which the pharmaceutical sales representative, for example, would have for the previously described application relating to pharmacy product promotions. This function would be done when communication via IP frame is not possible.
- The scanning surfaces can be paper, plastics, glossy papers, etc., that is, surfaces of any type where bar codes (or another class of bi-dimensional codes) are usually printed.
- The memory of the device must be able to store, preferably, several thousand records, and the information must be saved under a cryptography algorithm.
- The sizes of the codes can be very different, and the shapes can vary in size, so the device D is advantageously adapted (or it can be made adapted by means of reconfiguration or reprogramming) for reading codes of different sizes and shapes.
- The device D generates an acoustic signal when reading and the sound is different when the code has already been spotted with its imprint M or when there is an error.
- The total operating time must be at most one second.
- The spot M printed by the device D must not prevent the code from being able to be read by other point of sale scanners.
- The control means of the device D can preferably be reconfigured remotely.
- To the extent possible, the spot M must not be visible to the human eye under normal light conditions.
- The device D has access, by means of the aforementioned communication means of the control means 7, to a preferably wireless, short-, medium-, or long-range connection, such as to a 3G data network.
- The device D preferably has a protective case (not illustrated) that serves for multiple functions, such as cleaning the heads of the spotting injectors of the printing tool 2.

For some embodiments, the device D also has:
- A unique ID that identifies it which must be enclosed with the rest of the information in the record.
- A configurable clock for taking the time and date (which are enclosed with the IP address and the rest of the information).
- An either local or remote reconfiguration mechanism for carrying out the previously mentioned programming or reprogramming.

The actions that the user will perform for one embodiment of the method proposed by the second aspect of the invention, for the previously explained application to reading bar codes of pharmaceutical products being promoted, are described below:
1. Performing the normal sale process (that has always been carried out).
2. To record a marketing action of the product, performing the cleaning process for cleaning the device D inside the protective case if required (optional).
3. Extracting the device D from the protective case (optional).
4. Situating the device D, placing in contact the spacing bar 4 on the left-hand margin of the product bar code.
5. Pressing the actuation button (button 6 in Figure 1).
6. Paying attention to the acoustic message, differentiating between a successful operation and a defective operation.
7. If the operation was defective, verifying in the display 9 the type of action to be performed next: i) try again, ii) the product has already been read, or iii) device with technical problem report.
8. Putting the device in the protective case again (optional).

As regards to the sequence to be followed by the device, the actions to be performed are:
1. Detecting the spot M with the spectrometer 3 (or another class of detector).
2. If it is not spotted, spotting it (a spot cannot unwittingly be generated) by means of the printing tool 2.
3. Reading code C (bars/QR/IBI, in general) by means of the scanner 1.
4. Verifying whether the code C could be read.
5. Verifying whether the spot M was correct.
6. If the spot M was incorrect or the code C could not be read, reporting the error (acoustic error signal and message on the display 9) to the operator.
7. Recording the clock (timestamp).
8. Saving the record with its data: client or device code, record no., timestamp, product code, "flag" of previously read code, spectrum of the spot M (or RGB) and error code.
9. If there is communication with the control center, transmitting the record.
10. Closing the transaction.

In summary, the processes that are performed in the device D are the following:
⊙ Configuring the device.
⊙ Configuring the clock.
⊙ Spotting.
⊙ Scanning the code.
⊙ Reading the spot (spectrum).
⊙ Recording the record in memory and transmitting it.
⊙ Process of dumping the information of the memory of the device.
⊙ Cleaning heads.

The device can be configured in different ways, such as from another device through a USB connection or through another mechanism or communication path. The following information is generally provided to the device during configuration: device/client ID, IP address for communications, network and connection password, for example for Wifi. When the device is reconfigured, the record count is reset to 0. The configuration is done because the device will begin to be used or because it is to be reconfigured due to a client change or for any other reason (for example due to a change in the type of codes to be read).

The clock is used for determining the timestamp of each record and is reconfigured to establish a starting date and time in the same way that the device D is configured.

Spotting is preferably performed with ink visible only under ultraviolet light, the reading being performed with a spectrometer arranged a short distance away and by lighting with a white light LED so that the resulting spectrum has the minimum level of "noise". The spectrum of the non-spotted and spotted surface is stored in the control center for comparison with the spectrum received from the device taking into account that one and the same product can have several spectra.

To verify if the spectrum of a spot coincides, a number of significant points (40, 50,....) are stored. Those points are transferred into the record, and it is verified in the control center if they coincide with those corresponding to the original spectrum (signature). The points are the mean of the corresponding points in the RGB curves.

Record and transmission thereof:
⊙ The record that is stored in memory and transmitted has the following fields:
   > Client/device code.
   > Record no.
   > Timestamp.
   > Product code.
   > "Flag" of previously read code.
   > Spectrum of the spot (or RGB). Number of sufficient points: 50, 60 ...
   > Error code (no error, the surface was already spotted, printer out of ink, spotting not possible, error in device, etc.).
⊙ The records are stored cyclically. A space of N records is assigned in memory, and when this space is filled up, the first physical record is used to again to start saving information.
⊙ When a record is obtained, the attempt is made to transmit to the indicated IP address.
⊙ There is no problem if the attempt is made to transmit the record more than once because the control center is capable of determining if it had already received it with the "timestamp" and the record no.
⊙ When the device fails or has no ink, the control center will know right away because it receives the error code.

Memory dumping process:
⊙ Records are stored in the memory of the device D, and these records must reach the control center for processing that data.
⊙ As the records are obtained they are stored and transmitted to the IP address that is indicated in the configuration of the device
⊙ When there is no communication, those records must be dumped into other equipment. This dumping would be done through a connection, for example a USB connection, or by removing the memory and dumping it into equipment such as a portable computer.

### Cleaning the heads

⊙ The heads of the ink cartridges sometimes become blocked up and they must be cleaned to prevent this.
⊙ For this reason, the device D preferably remains in a protective cartridge or case where the cleaning process for cleaning the heads of the printing tool 2 would be performed.
⊙ In the cleaning process the user pushes a button which initiates the cleaning process by discharging a little ink and cleaning with a solvent. All this is performed in the protective cartridge.

A person skilled in the art could introduce changes and modifications in the described embodiments without departing from the scope of the invention as it is defined in the attached claims.

## Claims

1. A device for reading a machine-readable code printed on an object, which comprises:
- reading means (1) intended for reading said machine-readable code (C) printed on an object (O); and
- detection means intended for detecting whether the printed code (C) read with said reading means (1) has been altered;
the device being **characterized in that** it comprises alteration means for altering the printed code (C) which are configured and arranged for acting while using the reading means (1) to perform a first reading of the printed code (C).

2. The device according to claim 1, **characterized in that** said alteration means for altering the printed code (C) comprise a printing tool (2) intended to perform said alteration of the printed code (C) by printing at least one mark (M) thereon.

3. The device according to any one of the preceding claims, **characterized in that** said device is portable.

4. The device according to any one of the preceding claims, **characterized in that** said detection means comprise a reading instrument (3) configured for reading said mark (M).

5. The device according to any one of claims 2 to 4, **characterized in that** it comprises spacing means (4) for determining the optimal printing space or distance between the region of the printed code (C) on which said mark (M) is to be printed and ink outlet nozzles of said printing tool (2).

6. The device according to any one of the preceding claims, **characterized in that** it comprises control means (7) intended for controlling:
- said reading means (1) to perform at least a first and a second non-simultaneous readings;
- said alteration means for altering the printed code (C) to perform said alteration while performing said first reading of the printed code (C) or operations associated therewith that are prior to, simultaneous with or after the first reading; and
- said detection means to perform said detection of whether the printed code (C) has been altered.

7. The device according to claim 6, **characterized in that** said control means (7) comprise a processing system with at least one memory intended for storing information about read printed codes, including information relating to whether a printed code had already been previously read and information about the result of said detection of whether the printed code has been altered.

8. The device according to claim 6 or 7, **characterized in that** it comprises an acoustic emitter (8) controlled by said control means (7) for emitting different acoustic signals depending on whether or not it is detected that the printed code (C) has been altered during the reading of said printed code (C).

9. The device according to any one of the preceding claims, **characterized in that** said alteration means for altering the printed code (C) are intended to perform an alteration detectable by said detection means but undetectable by other devices or systems for reading printed codes.

10. The device according to any one of the preceding claims, **characterized in that** it comprises a casing (5) internally housing at least part of the reading means (1), of the alteration means for altering the printed code, of the detection means and of the control means (7).

11. A method for reading a machine-readable code printed on an object, which comprises:
a) performing a first reading of said machine-readable code (C) printed on an object (O);
b) altering said printed code (C); and
c) detecting, during a second reading thereof or during operations associated with said second reading that are prior to, simultaneous with or after said second reading, that the printed code (C) has been altered;
the method being **characterized in that** it comprises performing said step b) while performing said first reading or operations associated therewith that are prior to, simultaneous with or after step a).

12. The method according to claim 11, **characterized in that** to perform said first reading the method comprises the use of a device (D) including reading means (1), said operations associated with the first reading being operations that are included in said use of said device (D), including the approximation of said device (D) to the printed code (C), the emission/reception, by means of said reading means (1), of an optical reading signal headed towards or received from the printed code (C) and the distancing of the device from the printed code (C).

13. The method according to claim 12, **characterized in that** it comprises performing said alteration using alteration means included in said device (D) and performing said detection using detection means also included in the device (D).

14. The method according to claim 13, **characterized in that** it comprises performing at least the following actions sequentially using said device (D):
- detecting whether or not the printed code (C) has been altered, and:
- if it has not been altered:
- altering it in said step b); and
- performing said first reading of the printed code (C) of step a);
or
- if the printed code (C) has been altered:
- performing said second reading of the printed code (C).

15. The method according to claim 13 or 14, **characterized in that** it comprises the use of the device according to any one of claims 1 to 10.
